# EUROPEAN PATENT APPLICATION

(11) **EP 1 700 827 A1**
(43) Date of publication of application: **13.09.2006**
(21) Application number: 05425148.3
(22) Date of filing: 11.03.2005
(51) Int. Cl.: C03B 7/00, C03B 7/086, C03B 7/10

(54) **System and method for feeding glass gobs for hollow glassware forming machines, and computer program product therefor**

(71) Applicant: BDF HOLDING S.p.A., 36100 Vicenza (IT)
(72) Inventor: Bellina, Claudio, 36030 Caldogno (Vicenza) (IT); Sasso, Daniele, 36100 Vicenza (IT)
(74) Representative: Notaro, Giancarlo

(57) **Abstract**

Described herein is a system for feeding glass gobs, for I.S. hollow-glassware forming machines, comprising an extrusion plunger (35) and a cutting unit (38), which are directed by a control unit (12) that controls corresponding servo systems (16, 17) for forming a sequence of glass gobs, there being comprised in said sequence of glass gobs at least one first gob (G1) and a subsequent second gob (G2) having a mass different from said first gob (G1), said control system (12) being configured for directing said extrusion plunger (35) according to at least one first motion profile (P) for extruding said first gob and according to a second different motion profile (P2, P3, P4) for extruding said second gob (G2).

According to the invention, said control system (12) is configured for controlling a portion (p2) prior to an instant of cutting (xₜ, xₜ₂) of said second motion profile (P2, P3, P4), imposing that said portion (p2) should determine in the second gob (G2) a mass of glass coinciding with a mass determined, in the second gob (G2), by a corresponding portion (p) prior to a corresponding instant of cutting (xₜ₁) in the first motion profile (P).

## Description

The present invention relates to systems for feeding glass gobs, the so-called "feeders", for I.S. (Individual Sections) hollow-glassware forming machines, comprising an extrusion plunger and a cutting unit which are directed by a control unit for forming a sequence of glass gobs, there being comprised in said sequence of glass gobs at least one first gob and a subsequent second gob having a mass different from said first gob, said control system being configured for directing said extrusion plunger according to at least one first motion profile for extruding said first gob and according to a second different motion profile for extruding said second gob.

A similar system is known, for example, from the European patent application No. EP 0 668 248 A2.

The so-called "I.S." (Individual Sections) machines for forming hollow glassware, such as bottles or containers of various types, comprise individual sections, each of which is able to carry out the entire cycle of production, starting from the molten glass, until the finished glass article is obtained.

The individual sections of the machine are set alongside one another and in line, and each of them is constituted by: a parison die, where there is formed, by blow moulding, a first parison or blank of the article to be formed; a device for transferring the parison; a finishing die that receives the parison from the aforesaid transfer device and forms, by blow moulding, the finished article; and an extractor mechanism, which picks up the finished article from the finishing die and sets it on a conveyor at output from the machine.

The molten glass gobs that are delivered to the parison dies of the various sections by means of cast-iron chutes, are obtained by operating on a feed tank, which constitutes the source of molten glass via a plunger mechanism, which controls extrusion of flow of molten glass through an orifice in the bottom of the tank. The plunger operates in association with a cutting unit constituted by shears arranged at the outlet of said orifice that cut the individual molten glass gobs.

The plungers are usually more than one, and each operates cyclically so as to control the rate at which the glass comes out of the orifice made in the tank. The motion of each plunger hence follows a predetermined motion profile, in terms of length of the stroke of the plunger, top dead centre, and bottom dead centre.

It is in general of interest to vary said motion profiles for the purpose of obtaining gobs with different weights and hence be able to produce different articles. The variation of the profile during the process of production, however, generates drawbacks linked to the control of the weight of each gob and to the synchronization of the movements of the plunger and the shears with the sections set downstream.

From the U.S. patent application No. U.S. US2003/0172675 there is known the technique of controlling the plunger and the corresponding shears individually according to the actuation times and to the safety distances, when it is intended to produce gobs with different masses, which thus require cycles occupying different lengths of time. The plunger and the shears are controlled by a synchronization member to enable them to function in conjunction with the conveyor. Each parison die is fed with a feed cycle precisely via said control device. The system makes it possible to delay feed as required.

From the aforementioned European patent application No. 0 668 248 A2, there is known, instead, the technique of generating two different cams for the movement of the plunger, which can be used alternatively to produce either gobs of small mass or gobs of larger mass.

As already mentioned at the start of the present description, a feeding system, or feeder, having the characteristics specified in the pre-characterizing part of the annexed Claim 1 is known from the aforesaid document No. EP 0 668 248.

The known systems do not take into account the drawbacks that arise in the formation of the gob, as regards the control of the mass, when, in a sequence of gobs, there occurs a transition from one gob with a certain mass to a gob with a different mass.

The purpose of the present invention is to provide a system for feeding glass gobs to machines for forming hollow glassware of the type referred to in the pre-characterizing part of the annexed Claim 1 that will be free from the drawbacks discussed above.

In order to achieve said purpose, the object of the invention is a system of the type defined above, further characterized in that the second motion profile corresponding to said second glass gob depends upon the first motion profile. A further object of the invention is a corresponding method, as well as a computer-program product directly loadable into the memory of a digital processor and which comprises software code portions of for performing the steps of the method when the computer-program product is run on a digital processor.

Thanks to said characteristic, the system according to the invention overcomes the drawbacks of the device known from EP 0 668 248, where switching between the motion profiles does not occur taking into account the previous motion profile.

In the preferred embodiment of the invention, the second motion profile comprises a portion defined upstream of an instant of cutting by the cutting unit, said portion having values that determine an amount having a mass of glass coinciding with an amount having a mass given by a corresponding portion in the first motion profile.

Furthermore, preferably, the second motion profile comprises a portion defined upstream of the instant of cutting by the cutting unit at values coinciding with those of a corresponding portion in the first motion profile.

The arrangement described above has the advantage of enabling modifications in the mass of the last gob not to be required prior to a change of motion profile in so far as the portion of new profile prior to cutting determines outflow of a given amount of glass equal to that determined by the previous motion profile.

Further characteristics and advantages of the invention will emerge from the ensuing description, with reference to the annexed set of drawings, which is provided purely by way of non-limiting example, and in which:
- Figure 1 illustrates a partial view of a system for feeding glass gobs according to the invention;
- Figure 2 illustrates a working diagram of the control of a system for feeding glass gobs according to the invention;
- Figures 3, 4, 5 and 6 are time diagrams illustrating regulations and adjustments performed by the system according to the invention;
- Figure 7 is a diagram illustrating a program for control of the system according to the invention;
- Figure 8 is a diagram illustrating a calculation procedure applied in the control program of Figure 7;
- Figures 9a and 9b are diagrams illustrating a step of operation of the system according to the invention; and
- Figures 10a and 10b illustrate an example of embodiment of the control program of the system according to the invention.

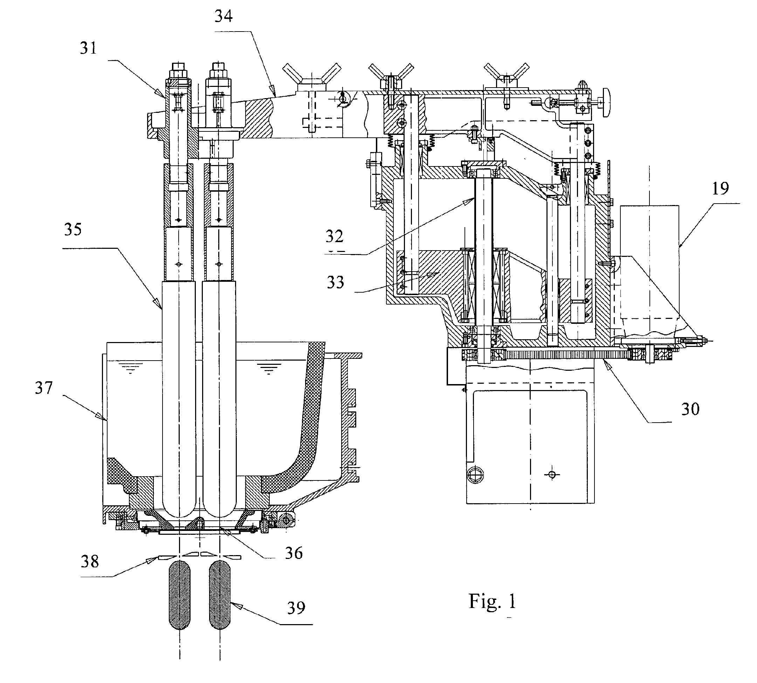

Represented in Figure 1 is a side view of a system for feeding glass gobs, which comprises a servo motor feeder 19, which by means of a mechanical transmission transmits motion to a plunger-holder 31, i.e., a stemlike member that carries a plunger 35 in its terminal part. In particular, the servo motor feeder 19, via a toothed-belt drive 30, transmits the motion to a ballscrew 32, which moves, in a vertical direction, a carriage 33, which is rigidly connected to the plunger-holder arm 34, on which the plunger-holder 31 is housed.

The plunger-holder 31 comprises, as has been said, a terminal part that constitutes the plunger 35, made of refractory material, said plunger 35 operating in an orifice 36 of a tank 37 so as to extrude the molten glass. Shears 38 arranged underneath said orifice 36 and driven by a servo motor cut the flow of molten glass to form a gob 39.

As may be understood from Figure 1, the motion profile is imparted to the toothed-belt drive 30 through the servo motor 19, which sets the parameters of the vertical range of action of the plunger 35, in particular the stroke, the top dead centre, and the bottom dead centre, as well as the speed profile according to which the range of action of the plunger 35 is determined.

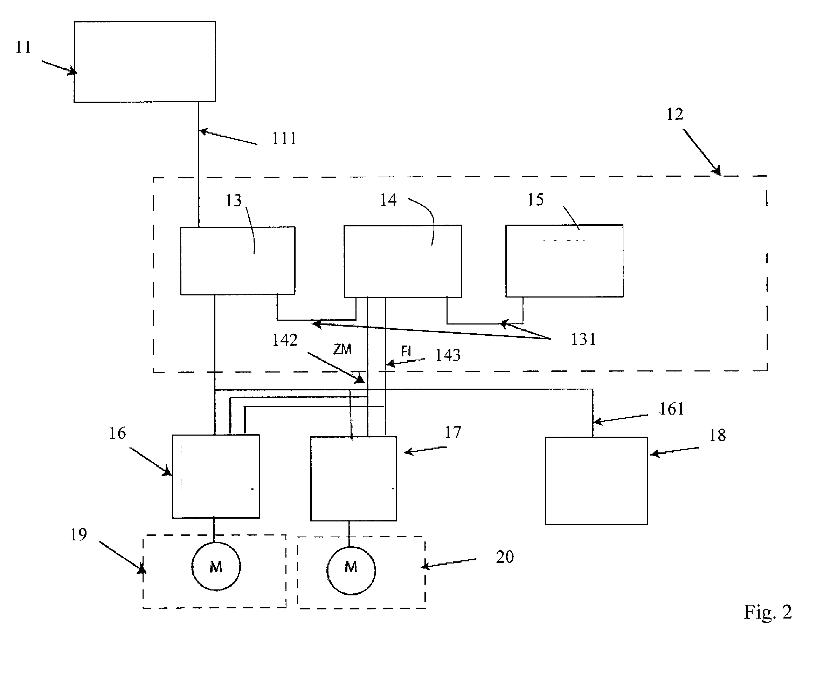

Represented in Figure 2 is the block diagram of a control system.

The system comprises a computer 11 connected, via an Ethernet connection 111, to a central processing unit or CPU 13 of a programmable logic 12. The CPU 13 is connected, via an internal bus 131, to a frequency-generating module 14 and to a local digital input/output module 15, which also form part of the programmable logic 12. Said CPU 13 connects, via a field bus 161, smart peripherals 16 and 17 for control of servo motors of the plunger 19 and of the shears 20 respectively, as well as of remote digital input/output modules 18.

A zero-machine signal ZM and a machine frequency FI are moreover sent from the frequency-generating module 14 on respective signal lines 142 and 143 to the servo motors of the plunger 19 and of the shears 20 to be used as time references.

A computer program is loaded into the computer 11 for handling feed of glass gobs and, in particular, for implementing a procedure of generation of motion profiles P of the plunger 35 and of the shears 38. The motion profile P that is executed by the plunger 35 is a curve that describes the vertical position of the plunger 35 according to the time or the angle X° of the machine cycle.

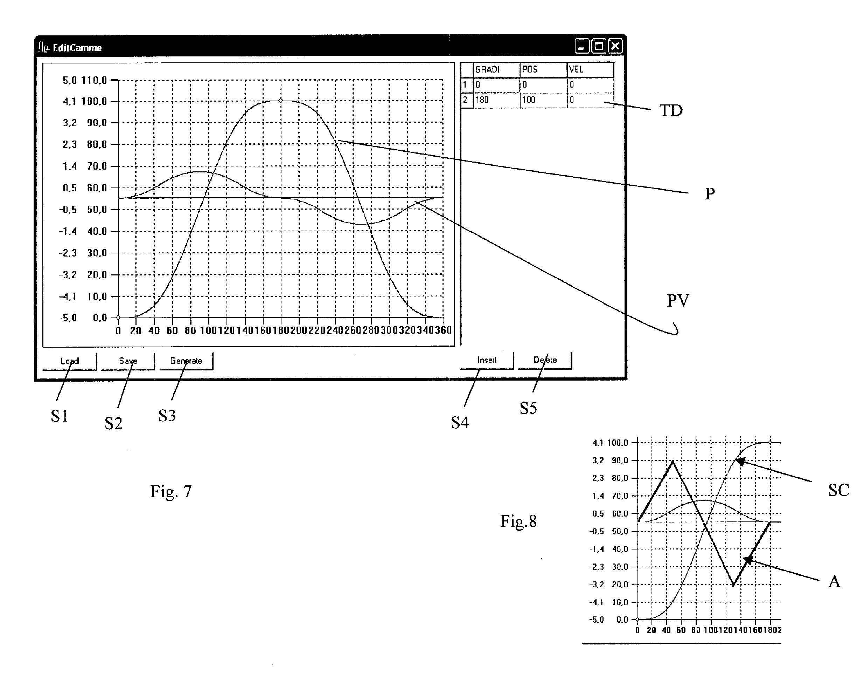

Said procedure envisages construction, starting from a series of points, of the motion profile P. The number of points is variable and arbitrary. For each of said points the position is set according to the angle X° of machine cycle and the slope of the curve of the motion profile P in that point. It is possible to perform the operation of saving the curves in a format suitable for subsequent re-editing, and this is symbolized by the key S2 in the screen shown in Figure 7, or in a format suitable for being loaded, for the actuation of the machine, by means of the terminal machine program, in the screen of Figure 7, by operating a key S3. The curve generated is loaded into the CPU 13 of the programmable logic 12 and, via the field bus 161, reaches the smart peripherals 16.

A special loading key S1 is provided for subsequently reloading the curve into the program for generation of motion profiles of the plunger.

The program that implements the procedure for generation of motion profiles of the plunger shows at program start a screen like the one illustrated in Figure 7, where a motion profile P and a corresponding speed profile PV are shown. The axis of the abscissa is graduated in machine-cycle degrees X°, whilst the axis of the ordinate is graduated in dimensionless percentage for the motion profile P and in percentage/machine degree X° for the speed profile PV. A table TD shows the sequence of the points entered. An initial point and a final point are always entered with zero position and zero speed by default. The final point is not shown in the table TD.

At start-up of the procedure for generation of motion profiles of the plunger, a default curve is displayed, which is symmetrical, with a central point in the position 100 and with speed zero.

Interpolation is envisaged of the points of the curve, which are entered by means of motion profiles, with cubic segments SC having a triangular acceleration profile A, as represented in Figure 8.

The procedure for generation of motion profiles of the plunger moreover envisages imposing the condition that the slope of the curve in the points given will be equal to the slope set. The curves are generated without sharp edges, imposing the condition that the slope of the curve on the right and on the left of each point will be equal.

To insert a new point in the curve, it is envisaged to select a point from the table TD, after which the new point is to be inserted, and then to press the pushbutton S4 for entry. The new point will be entered with abscissa and ordinate equal to the average of the values corresponding to the preceding and subsequent points. A key S5 implements a function of cancellation of points from the table TD.

The motion profiles P generated using the procedure described with reference to Figures 7 and 8 can be supplied in a predetermined sequence to the servo-motor system 19 so as to vary the parameters of the range of action of the plunger 35 and also the parameters for movement of the shears 38.

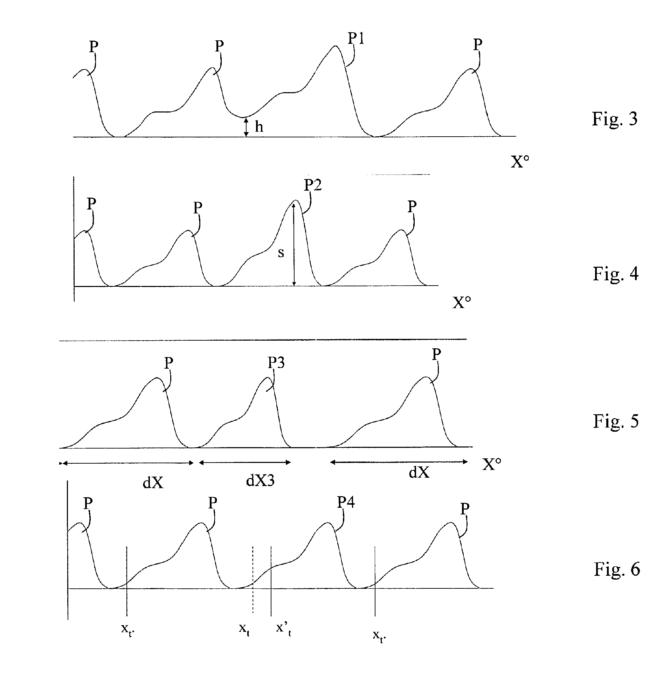

Shown in Figures 3, 4, 5 and 6 are different sequences of motion profiles that can be implemented with the feed system proposed. The abscissa of the diagrams is represented by the machine angle X°, whereas the moment at which cutting of the gob occurs, which corresponds to a given value of machine angle X°, is indicated as the instant of cutting xₜ.

Represented therefore in Figure 3 is a succession of motion profiles P and P1, in which the starting height h of the plunger in the motion profile P1 is varied.

Figure 4 represents a succession of motion profiles P and P2, in which a stroke s of the plunger with respect to the motion profile P2 is varied.

Figure 5 represents a succession of motion profiles P and P3, in which the speed of the plunger 31 in a motion profile P3 is varied. The motion profiles P are developed on an arc of angle dX expressed in machine degrees, i.e., the time of execution of the profile, whilst the time profile P3 with varied speed operates on a varied arc dX3, which is shorter, albeit leaving the shape of the profile unvaried, except for the angle compression or time compression.

Figure 6 represents, instead, a succession of motion profiles P and P4 in which the step of cutting of the shears 38 is varied. On the motion profiles P there is identified an instant of cutting xₜ, whereas in the motion profile P4 a retarded instant of cutting x'ₜ is used.

The successions of motion profiles P, such as the ones shown in Figures 3, 4, 5 and 6, which can be set by means of the program that operates on the computer 15 and can then be loaded into the programmable logic 12, according to an aspect of the invention, are not, however, merely adjacent juxtaposed to one another along the time axis. In fact, to modify the setting of a motion profile it is also necessary to modify the shape and weight of the previous gob.

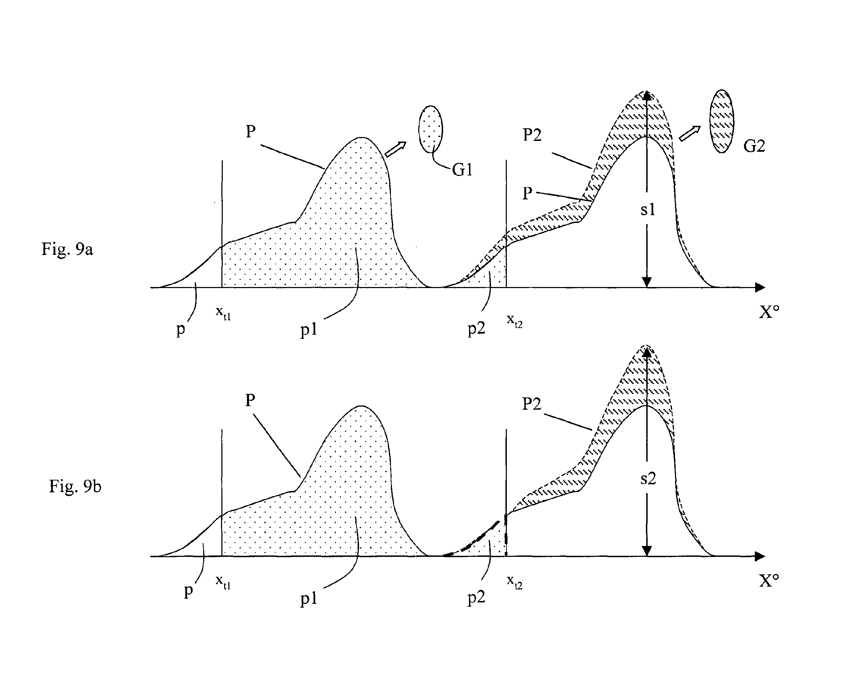

In order to illustrate the meaning of said operation, Figure 9a represents a first motion profile, which is a normal motion profile P, corresponding to a first gob G1, and a second motion profile, which is a motion profile P2 with stroke s increased, namely, with stroke s1, to obtain a second gob G2 of greater weight. The case thus corresponds to the sequence illustrated in Figure 4. In comparison, in Figure 9a a normal motion profile P is also superimposed on the motion profile P2 with stroke s increased. As may be noted from Figure 9a, the motion profile P comprises two portions, divided by the instant of cutting xₜ₁. A first portion p1, corresponding to angles subsequent to the instant of cutting xₜ₁, corresponds to an action of pumping of the gob G1 by the plunger 31. A second portion p, corresponding to machine angles prior to the instant of cutting xₜ₁, does not in actual fact affect the mass and shape of the gob G1, whereas it affects a first portion p2 of the subsequent motion profile, which corresponds to a suction stroke of the plunger 31, i.e., as may be noted from Figure 9a, to a part of the action of pumping of the profile P or P2 for the gob G2.

Consequently, the first motion profile P does not entirely determine the mass of the first gob G1. The mass of said first gob G1, as may be noted from the location of the instant of cutting Xₜ₂ performed by the shears 38, also comprises the portion p2 of the motion profile P or P2 subsequent to said instant of cutting xₜ₂.

Switching to the second motion profile P2 with increased stroke, in order to obtain a gob G2 having a larger mass (dashed line in Figure 9a), the portion p2 prior to the instant of cutting xₜ₂ is modified with respect to the portion p that had been used up to that moment in the sequence, thus changing also the mass of glass of the preceding first gob G1. According to the invention, it is hence envisaged to maintain the portion p2 of the motion profile P2 with increased stroke identical to and coinciding with the corresponding portion p of the normal motion profile P corresponding to the first gob G1, i.e., the portion prior to a preceding instant of cutting xₜ₁.

In other words, the procedure of generation of the motion profiles envisages maintaining a congruence between the portions p2 and p prior to the instants of cutting Xₜ₂ and xₜ₁ respectively, and modifying just the portion p1 of the motion profile P2 with increased stroke to respect the specifications of change of mass of the second gob G2. In the example shown in Figure 9b, this is obtained by further increasing the stroke s of the motion profile P2 to an appropriate value s2, so that corresponding to the portion p1 is a greater mass of molten glass, whilst the portion p2 of the profile P2 remains coincident with the portion p of the preceding first motion profile P.

It should be noted that the coincidence of the curves corresponding to the portions p2 and p prior to the instants of cutting xₜ₂ and xₜ₁, respectively, constitutes a simple and effective way for imposing a constraint of constancy on the mass of the gob determined by the suction stroke of the plunger; however, other strategies that will enable constraint of the mass corresponding to the portion p2 are possible by changing, however, its slopes and/or values.

By way of example, the first gob G1 can have a weight of 480 grams, and the second gob G2 a weight of 520 grams.

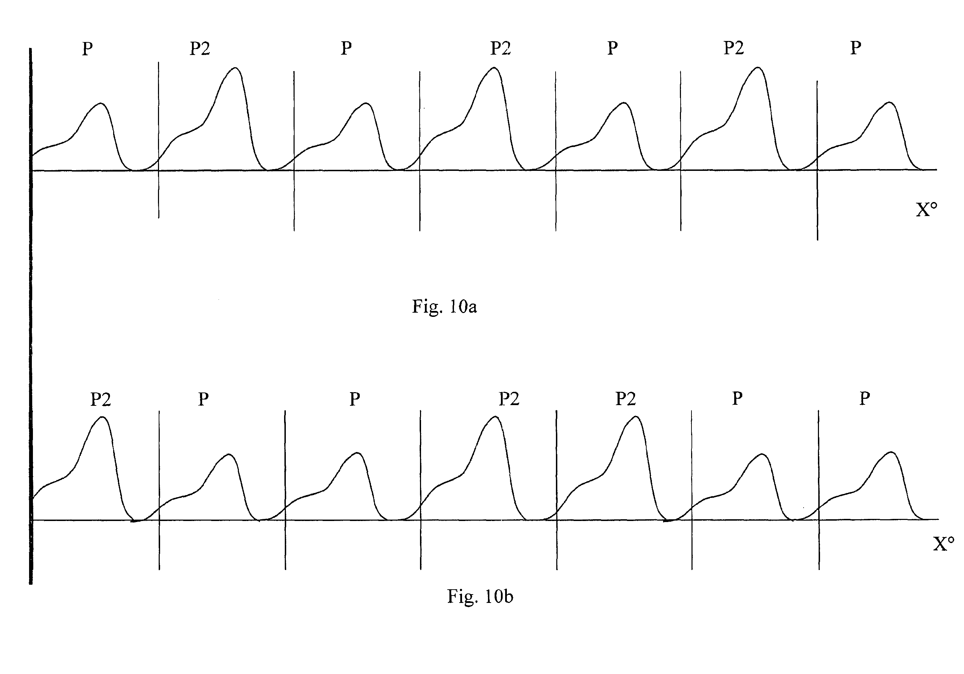

Figures 10a and 10b represent two preferred sequences of switching between the first motion profile P and the second motion profile P2, with the stroke of the plunger 31 increased. Figure 10a represents a sequence of the type P-P2-P-P2-P-P2-P-P2, with profiles that alternate with each range of action of the plunger. Figure 10b represents a sequence of the type P-P-P2-P2-P-P-P2-P2, with profiles that alternate with every two strokes of the plunger.

From the foregoing description, it is evident that the system according to the invention enables programming of each motion profile executed in a given time interval or with a given machine angle by the plunger, advantageously adapting said motion profile according to the preceding motion profile, so as to prevent repercussions on the mass of the gob.

The system according to the invention advantageously further comprises regulation of the motion profile with respect to a plurality of variables, including top and bottom dead centres, stroke and speed of execution of the profile, as well as regulation of the cutting step, in this way enabling complete flexibility, which determines the possibility of access to 'just in time' production techniques, without any ties in scheduling of production, reduction of the warehousing times of certain articles, reduction of the maintenance of the moulds for compensation of the volumes, better guarantees of respecting the capacity declared, and also the possibility, via the improved control of the mass, of reducing the weight of the glass for each article.

Of course, without prejudice to the principle of the invention, the details of construction and the embodiments could vary widely with respect to what is described and illustrated herein purely by way of example, without thereby departing from the scope of the present invention.

## Claims

1. A system for feeding glass gobs, for I.S. hollow-glassware forming machines, comprising an extrusion plunger (35, 35) and a cutting unit (38), which are directed by a control unit (12), which controls corresponding servo systems (16, 17) for forming a sequence of glass gobs, there being comprised in said sequence of glass gobs at least one first gob (G1) and a subsequent second gob (G2) having a mass different from said first gob (G1), said control system (12) being configured for controlling said extrusion plunger (35) according to at least one first motion profile (P) for extruding said first gob (G1) and according to a second different motion profile (P2, P3, P4) for extruding said second gob (G2),
said feeding system being **characterized in that** said control system (12) is configured for controlling values assumed by a portion (p2) prior to an instant of cutting (xₜ, xₜ₂) of said second motion profile (P2, P3, P4), imposing that said values of said portion (p2) should determine in the second gob (G2) a mass of glass coinciding with a mass that is determined, in the second gob (G2) by values of a corresponding portion (p) prior to a corresponding instant of cutting (xₜ₁) in the first motion profile (P).

2. The system according to Claim 1, **characterized in that** said portion (p2) prior to an instant of cutting (xₜ, xₜ₂) of said second motion profile (P2, P3, P4) has values coinciding with the values of said corresponding portion (p) prior to a corresponding instant of cutting (xₜ₁) in the first motion profile (P).

3. The system according to Claim 2, **characterized in that** said control system is moreover configured for modifying parameters (s, h, dX) of said second motion profile for obtaining said different value of mass of said second gob (G2).

4. The system according to Claim 3, **characterized in that** said parameters (s, h, dX) of said second profile are selected in a set comprising a stroke (s) of the plunger (35), a starting height (h) of the plunger (35), a speed (dX) of the plunger (35).

5. The system according to one or more of Claims 1 to 4, **characterized in that** said control system (10) is configured for controlling said plunger (35) to carry out sequences of motion profiles that contain variations in parameters selected from among said parameters (s, h, dX) and/or to control said cutting unit (38) to operate according to different values of instants of cutting (xₜ, x'ₜ).

6. The system according to one or more of Claims 1 to 5, **characterized in that** said control system (12) comprises processing means (13) configured for executing a procedure of generation of motion profiles (P, P2, P3, P4).

7. The system according to Claim 6, **characterized in that** said processing means (13) are configured for generating a motion profile (P, P2, P3, P4) interpolating with curves (SC) a set of discrete points inserted in an insertion operation (S4) of said procedure of generation of motion profiles (P, P2, P3, P4).

8. The system according to Claim 7, **characterized in that** said processing means (13) are configured for loading the motion profiles (P, P2, P3, P4) generated, for the actuation, in modules (12) for controlling and driving servo systems (16, 17) of said plunger (35) and/or cutting unit (38).

9. A method for feeding glass gobs, for I.S. hollow-glassware forming machines, which envisages directing an extrusion plunger (35) and a cutting unit (38) via a control unit (12), which controls corresponding servo systems (16, 17) for forming a sequence of glass gobs, there being comprised in said sequence of glass gobs at least one first gob (G1) and a subsequent second gob (G2) having a mass different from said first gob (G1), and controlling via said control system (12) said extrusion plunger (35) according to at least one first motion profile (P) for extruding said first gob (G1) and according to a second different motion profile (P2, P3, P4) for extruding said second gob (G2),
said method being **characterized in that** it further comprises the operations of:
controlling through said control system (12) values assumed by a portion (p2) prior to an instant of cutting (xₜ, xₜ₂) of said second motion profile (P2, P3, P4), imposing that said values of said portion (p2) should determine in the second gob (G2) a mass of glass coinciding with a mass that is determined in the second gob (G2) by values of a corresponding portion (p) prior to a corresponding instant of cutting (xₜ₁) in the first motion profile (P).

10. The method according to Claim 9, **characterized in that** it further comprises imposing on said portion (p2) prior to an instant of cutting (xₜ, xₜ₂) of said second motion profile (P2, P3, P4) values coinciding with the values of said corresponding portion (p) prior to a corresponding instant of cutting (xₜ₁) in the first motion profile (P).

11. The method according to Claim 10, **characterized in that** it further comprises modifying, via said control system, parameters (s, h, dX) of said second motion profile for obtaining said different value of mass of said second gob (G2).

12. The method according to Claim 11, **characterized in that** it further comprises selecting said parameters of said second profile (s, h, dX) in a set comprising a stroke (s) of the plunger (35), a starting height (h) of the plunger (35), and a speed (dX) of the plunger (35) .

13. The method according to one or more of Claims 9 to 12, **characterized in that** it further comprises controlling said plunger (35) via said control system (12) to provide sequences of motion profiles that contain variations in parameters selected from amongst said parameters (s, h, dx) and/or to control said cutting unit (38) to operate according to different values of instants of cutting (xₜ, x'ₜ) .

14. The method according to one or more of Claims 9 to 13, **characterized in that** it comprises providing in said control system (12) processing means (13) for executing a procedure of generation of motion profiles (P, P2, P3, P4).

15. The method according to Claim 14, **characterized in that** it further comprises generating via said processing means (13) a motion profile (P, P2, P3, P4) interpolating via curves (SC) a set of discrete points inserted in an operation of insertion (S4) of said procedure of generation of motion profiles (P, P2, P3, P4) .

16. The method according to Claim 15, **characterized in that** it further comprises loading, via said processing means (13), the motion profiles (P, P2, P3, P4) generated, for actuation, in modules (12) for controlling and driving servo systems (16, 17) of said plunger (35) and/or cutting unit (38).

17. A computer-program product which directly loadable into the memory of a digital processor and comprises software code portions for performing the steps of the method according to Claims 9 to 16 when the computer-program product is run on a digital processor.
